# EUROPEAN PATENT APPLICATION

(11) **EP 4 715 892 A1**
(43) Date of publication of application: **25.03.2026**
(21) Application number: 24830823.1
(22) Date of filing: 26.06.2024
(51) Int. Cl.: H01M 4/139, H01M 4/04, G01B 11/00

(54) **QUALITY TRACING SYSTEM AND METHOD FOR LITHIUM ELECTRODE SHEET**

(30) Priority: 30.06.2023 CN 202310799413
(71) Applicant: SHENZHEN MANST TECHNOLOGY CO., LTD., Shenzhen, Guangdong 518118 (CN)
(72) Inventor: HU, Wanghui, Shenzhen, Guangdong 518118 (CN); PENG, Jianlin, Shenzhen, Guangdong 518118 (CN)
(74) Representative: Bryn Aarflot AS
(86) International application number: PCT/CN2024/101675
(87) International publication number: WO 2025/002187

(57) **Abstract**

The present application relates to the field of quality tracing technology and discloses a quality tracing system and method for lithium electrode sheets. The system includes: an electrode sheet segmentation unit, a coating unit, an electrode sheet measurement unit and a control unit, wherein the electrode sheet segmentation unit is configured to perform physical segmentation on lithium electrode sheets to be processed; the coating unit is configured to identify and coat the lithium electrode sheets which have been subjected to the physical segmentation; the electrode sheet measurement unit is configured to measure the coated lithium electrode sheet; and the control unit is configured to control the electrode sheet segmentation unit, the coating unit and the electrode sheet measurement unit to operate, collect data generated during a physical segmentation process, a coating process and a measurement process of the electrode sheets and store the data, and perform quality tracing on the lithium electrode sheets according to the stored data. In the present application, good products and defective products of lithium electrode sheets can be accurately distinguished, thereby avoiding the phenomenon in which the defective products of the lithium electrode sheets flow to subsequent procedures and the good products are overly filtered out and scrapped, and making the statistics on the yield of the lithium electrode sheets more accurate, and the quality tracing of the lithium electrode sheets more convenient and comprehensive.

## Description

The present application claims priority to Chinese Patent Application No. 202310799413.X, filed with the China National Intellectual Property Administration on June 30, 2023, and entitled "Quality Tracing System and Method for Lithium Electrode Sheets", which is incorporated herein by reference in its entirety.

### TECHNICAL FIELD

The present application relates to the field of quality tracing technology, and particularly to a quality tracing system and method for lithium electrode sheets.

### BACKGROUND

The era of electronic informationization in Industry 3.0 has further significantly improved the manufacturing process and the degree of automated control; however, it can no longer meet the technical development demands of the current era. Therefore, the Industry 4.0 era has emerged, aiming to develop a new production mode that integrates a physical world with a virtual network world, implements refined management throughout an entire product lifecycle, and achieves full digitalization of a manufacturing process and high integration of information and communication technologies.

Lithium batteries are green batteries with excellent performance composed of electrode sheets, a separator, and an electrolyte. The electrode sheets are core components and vital parts of the lithium batteries. The electrode sheets have visual defects such as creases, damage, missing coating and breakage. These defects not only significantly impair the service life of the batteries, but are also highly likely to pose significant safety hazards during use. Therefore, an inspection process for electrode sheets during manufacturing is particularly crucial, serving as an important means to ensure the performance reliability of electronic products.

However, in a current production process of coated electrode sheets for lithium batteries, multiple coating passes are performed simultaneously. Weight measurement data of the electrode sheets during the production process is incomplete, with area data gaps. Additionally, electrode sheet marking is not refined. Quality tracing of an electrode sheet product is performed on a roll-by-roll basis. Once an entire roll of electrode sheets passes an overall inspection, the entire roll is deemed to meet the requirements, and subsequent procedures are then carried out. However, there are still unqualified sheets in the roll, which affect the subsequent procedures. That is to say, when quality abnormalities occur among the electrode sheets, it is difficult to determine specific locations of abnormal electrode sheets, resulting in difficulty in quality tracing of the electrode sheets. When an entire roll of electrode sheets fails an overall inspection, the entire roll is deemed to fail to meet the requirements, and the entire roll of electrode sheets is scrapped. However, there are still qualified sheets in the roll, resulting in that good products are overly filtered out, which not only wastes electrode sheets but also increases production costs.

### SUMMARY OF THE INVENTION

In view of this, the present application provides a quality tracing system and method for lithium electrode sheets. By physically segmenting an entire roll of electrode sheets and incorporating a manufacturing execution system, the refinement of electrode sheet marking and quality traceability are achieved; and good products and defective products of electrode sheets can be accurately distinguished, thereby avoiding the phenomenon in which the defective products of the electrode sheets flow to subsequent procedures and the good products are overly filtered out and scrapped, and making the statistics on the yield of the electrode sheets more accurate, and the quality tracing of the electrode sheets more convenient and comprehensive, so as to solve the technical problems raised in the above-described background.

In a first aspect, the present application provides a quality tracing system for lithium electrode sheets. The system includes:
an electrode sheet segmentation unit, a coating unit, an electrode sheet measurement unit and a control unit,
wherein the electrode sheet segmentation unit is configured to perform physical segmentation on lithium electrode sheets to be processed;
the coating unit is configured to identify and coat the lithium electrode sheets which have been subjected to the physical segmentation;
the electrode sheet measurement unit is configured to measure the coated lithium electrode sheet; and
the control unit is configured to control the electrode sheet segmentation unit, the coating unit and the electrode sheet measurement unit to operate, collect data generated during a physical segmentation process, a coating process and a measurement process of the electrode sheets and store the data, and perform quality tracing on the lithium electrode sheets according to the stored data.

According to the quality tracing system for lithium electrode sheets in the present application, by performing fine-grained physical segmentation on an entire roll of electrode sheets, the refinement of electrode sheet marking and quality traceability are achieved; and good products and defective products of electrode sheets can be accurately distinguished, thereby avoiding the phenomenon in which the defective products of the electrode sheets flow to subsequent procedures and the good products are overly filtered out and scrapped, and making the statistics on the yield of the electrode sheets more accurate, and the quality tracing of the electrode sheets more convenient and comprehensive.

In an optional implementation, the electrode sheet segmentation unit includes an unwinding mechanism, a strip-feeding length counter, a laser marking mechanism, and a winding mechanism, and the lithium electrode sheets to be processed are unwound by the unwinding mechanism, sequentially pass through the strip-feeding length counter and the laser marking mechanism, and are wound by the winding mechanism.

In the present application, using the electrode sheet segmentation unit, fine-grained physical segmentation on the entire coiled material of lithium electrode sheets can be achieved, facilitating more accurate quality tracing of the lithium electrode sheets.

In an optional implementation, the coating unit includes a laser-marked code reader and a coating mechanism, wherein the laser-marked code reader is configured to identify electrode sheet serial numbers, and the coating mechanism is configured to perform coating on the lithium electrode sheets to be processed; and the electrode sheet measurement unit includes a CCD dimensional measurement device and an electrode sheet weight measurement device, wherein the CCD dimensional measurement device is configured to measure the dimensions and position of coated areas on the electrode sheets, and the electrode sheet weight measurement device is configured to measure the weight of the electrode sheets, thereby feeding back areal density data of the electrode sheets.

The present application uses the electrode sheet measurement unit to measure the dimensions and weight of the fine-grained electrode sheets which have been subjected to the segmentation, helping to improve the quality of the electrode sheets, and increasing the precision of quality tracing of the lithium electrode sheets to some extent.

In a second aspect, the present application provides a quality tracing method for lithium electrode sheets, using the quality tracing system for lithium electrode sheets according to the first aspect to trace quality. The method includes:
obtaining electrode sheet serial numbers of lithium electrode sheets to be processed, and establishing an ea electrode sheet form database based on the electrode sheet serial numbers;
physically segmenting the lithium electrode sheets to be processed based on the ea electrode sheet form database, and obtaining data generated during a physical segmentation process of the electrode sheets;
performing coating and measurement on the physically segmented lithium electrode sheets, and obtaining data generated during a coating process and a measurement process of the electrode sheets; and
storing the electrode sheet serial numbers, the **ea** electrode sheet form database, the data generated during the physical segmentation process of the electrode sheets, and the data generated during the coating process and the measurement process, and performing quality tracing on the lithium electrode sheets based on the stored data.

In the present application, after the lithium electrode sheets to be processed are physically segmented based on the **ea** electrode sheet form database, the refinement of electrode sheet marking and quality traceability are achieved. Through the exclusive and comprehensive database for individual **ea** electrode sheets, adjustment reference data can be provided for pre-adjustment of subsequent production procedures. Additionally, good products and defective products of electrode sheets can be accurately distinguished, thereby avoiding the phenomenon in which the defective products of the electrode sheets flow to subsequent procedures and the good products are overly filtered out and scrapped, and making the statistics on the yield of the electrode sheets more accurate, and the quality tracing of the electrode sheets more convenient and comprehensive.

In an optional implementation, the process of obtaining electrode sheet serial numbers of lithium electrode sheets to be processed includes: inputting order information of the lithium electrode sheets to be processed into a control unit, and encoding the lithium electrode sheets to be processed according to a preset coding rule to obtain the electrode sheet serial numbers of the lithium electrode sheets to be processed.

In the present application, by assigning the electrode sheet serial numbers to the lithium electrode sheets, specific conditions of the electrode sheets and quality tracing information corresponding to the electrode sheet serial numbers can be accurately obtained, offering the advantages of rapidity, convenience and accuracy for the quality tracing of the electrode sheets.

In an optional implementation, the process of establishing an **ea** electrode sheet form database based on the electrode sheet serial numbers includes: obtaining relevant data of production procedures of the corresponding electrode sheets based on the electrode sheet serial numbers, and establishing the **ea** electrode sheet form database based on the relevant data, wherein the relevant data includes: order number, coating batch, slurry batch, date, time, slurry stirring equipment parameters, coating process equipment parameters, first article inspection data, and electrode sheet production process data corresponding to the electrode sheet serial numbers.

The present application uses the **ea** electrode sheet form database to store key data involved in the production procedures of the **ea** electrode sheets, facilitating rapid implementation of fine-grained quality tracing of the electrode sheets.

In an optional implementation, under the control of the control unit, the electrode sheet segmentation unit marks the electrode sheets in **ea** units, and physically segments the lithium electrode sheets to be processed based on the **ea** electrode sheet form database by physical laser marking, and the process thereof includes: using a laser marking mechanism to mark the lithium electrode sheets to be processed based on the electrode sheet serial numbers of the lithium electrode sheets to be processed, thereby defining the positions of **ea** electrode sheets to achieve physical segmentation of the lithium electrode sheets to be processed.

In the present application, under the control of a manufacturing execution system, the electrode sheets are marked in **ea** units, and by using the electrode sheet segmentation unit, fine-grained physical segmentation on the entire coiled material of lithium electrode sheets is achieved, facilitating more accurate quality tracing of the lithium electrode sheets.

In an optional implementation, after the physical segmentation of the lithium electrode sheets to be processed is completed, the **ea** electrode sheets are coated by a coating mechanism; and after the coating of each **ea** electrode sheet is completed, dimensional measurement is further performed by using a CCD dimensional measurement device, and weight measurement is further performed by using an electrode sheet weight measurement device, and dimensional data and weight data of the coated **ea** electrode sheets are input to the control unit for storage.

The present application uses the electrode sheet measurement unit to measure and store the dimensions and weight of the fine-grained electrode sheets which have been subjected to the segmentation, ensuring high quality of the dimensions and the weight of the fine-grained electrode sheets, and increasing the precision of quality tracing of the lithium electrode sheets to some extent.

In an optional implementation, the process of collecting the data generated during the coating process and the measurement process of the electrode sheets includes:
using a laser-marked code reader to identify marked electrode sheet serial numbers, and respectively obtaining distances from the laser-marked code reader to the coating mechanism, to the CCD dimensional measurement device, and to the electrode sheet weight measurement device, which are respectively denoted as a, b and c;
identifying electrode sheet serial numbers of the **ea** electrode sheets with marked codes, and when the laser-marked code reader identifies the electrode sheet serial number of the first ea electrode sheet, recording a counted value of the strip-feeding length counter at that time, which is denoted as m;
when the counted value of the strip-feeding length counter is m+a, starting to coat to-be-coated areas in the first row by the coating mechanism;
when the counted value of the strip-feeding length counter is m+b, starting to measure the dimensions of the coated areas in the first row by the CCD dimensional measurement device;
when the counted value of the strip-feeding length counter is m+c, starting to measure the electrode sheet weight in the coated areas in the first row by the electrode sheet weight measurement device; and
in a similar manner, performing the identification, coating and measurement processes on the remaining **ea** electrode sheets, and collecting data generated during the respective coating processes and the respective measurement processes of the **ea** electrode sheets.

In the present application, specific coating and measurement rules are set, and normal execution of procedures of electrode sheet production is ensured by using set specific numerical formulas.

In an optional implementation, the electrode sheet weight measurement device uses a matrix-type measurement method to measure the electrode sheet weight in the coated areas.

In the present application, the electrode sheet weight measurement is optimized into the matrix-type measurement method, which makes the distribution of the electrode sheet weight measurement more precise, thereby avoiding incomplete weight measurement data, and eliminating the occurrence of area data gaps.

### BRIEF DESCRIPTION OF THE DRAWINGS

In order to more clearly describe the technical solutions in specific implementations of the present application or in the prior art, the drawings for use in the description of the specific implementations or the prior art will be briefly described below. Apparently, the drawings in the following description merely represent some implementations of the present application, and persons of ordinary skill in the art may still derive other drawings from these drawings without creative efforts.
FIG. 1 is a schematic structural diagram of a quality tracing system for lithium electrode sheets according to an embodiment of the present application;
FIG. 2 is a schematic structural diagram of another quality tracing system for lithium electrode sheets according to an embodiment of the present application;
FIG. 3 is a schematic structural diagram of yet another quality tracing system for lithium electrode sheets according to an embodiment of the present application;
FIG. 4 is a schematic flow diagram of a quality tracing method for lithium electrode sheets according to an embodiment of the present application;
FIG. 5 is a schematic diagram of an **ea** electrode sheet form database according to an embodiment of the present application; and
FIG. 6 is a schematic diagram of **ea** electrode sheets according to an embodiment of the present application.

### DETAILED DESCRIPTION OF SPECIFIC EMBODIMENTS

In order to make the objects, technical solutions and advantages of the embodiments of the present application clearer, the technical solutions in the embodiments of the present application will be described below clearly and completely with reference to the accompanying drawings in the embodiments of the present application. Apparently, the embodiments described are merely some rather than all of the embodiments of the present application. All other embodiments obtained by those skilled in the art based on the embodiments of the present application without creative efforts fall within the scope of protection of the present application.

In current quality tracing of lithium electrode sheets, since electrode sheet marking of coated electrode sheets for lithium batteries is not refined, quality tracing is performed in roll units. Once an entire roll of electrode sheets passes an inspection, the roll flows into subsequent procedures. However, there are still unqualified sheets in the roll. In existing solutions, it is difficult to determine specific locations of abnormal electrode sheets. When an entire roll of electrode sheets fails an inspection, the entire roll of electrode sheets is scrapped. However, there are still qualified sheets in the roll, resulting in that good products are overly filtered out and wasted. The present application provides a quality tracing system for lithium electrode sheets. By physically segmenting an entire roll of electrode sheets and incorporating a manufacturing execution system, the refinement of electrode sheet marking and quality traceability are achieved; and good products and defective products of electrode sheets can be accurately distinguished, thereby avoiding the phenomenon in which the defective products of the electrode sheets flow to subsequent procedures and the good products are overly filtered out and scrapped, and making the statistics on the yield of the electrode sheets more accurate, and the quality tracing of the electrode sheets more convenient and comprehensive.

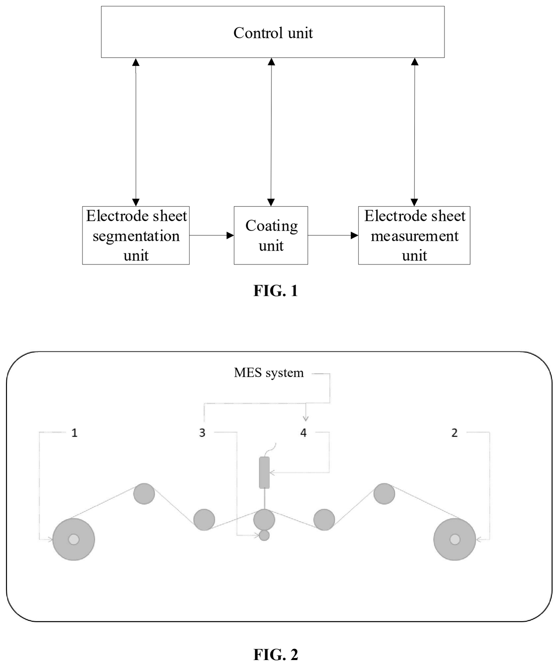

A quality tracing system for lithium electrode sheets according to an embodiment of the present application, as shown in FIG. 1, includes: an electrode sheet segmentation unit, a coating unit, an electrode sheet measurement unit and a control unit,
wherein the electrode sheet segmentation unit is configured to perform physical segmentation on lithium electrode sheets to be processed;
the coating unit is configured to identify and coat the lithium electrode sheets which have been subjected to the physical segmentation;
the electrode sheet measurement unit is configured to measure the coated lithium electrode sheet; and
the control unit is configured to control the electrode sheet segmentation unit, the coating unit and the electrode sheet measurement unit to operate, collect data generated during a physical segmentation process, a coating process and a measurement process of the electrode sheets and store the data, and perform quality tracing on the lithium electrode sheets according to the stored data.

It should be noted that the control unit is a manufacturing execution system. The manufacturing execution system (MES) is a production information management system for the shop-floor execution layer of manufacturing enterprises. The MES can provide the enterprises with management modules including those for manufacturing data management, planning and scheduling management, production dispatching management, inventory management, quality management, human resource management, work center/equipment management, tooling and fixture management, procurement management, cost management, project dashboard management, production process control, underlying data integration and analysis, and upper-level data integration and decomposition. It builds a solid, reliable, comprehensive and feasible manufacturing collaborative management platform for the enterprises.

In this embodiment, the MES is used to monitor and manage the procedures of lithium electrode sheet production, and the electrode sheet segmentation unit, the coating unit and the electrode sheet measurement unit are used to assist in quality tracing of the lithium electrode sheets. Specifically, by performing fine-grained physical segmentation on an entire roll of electrode sheets, and by incorporating the MES system, the refinement of electrode sheet marking and quality traceability are achieved, and good products and defective products of electrode sheets can be accurately distinguished, thereby avoiding the phenomenon in which the defective products of the electrode sheets flow to subsequent procedures and the good products are overly filtered out and scrapped, and making the statistics on the yield of the electrode sheets more accurate, and the quality tracing of the electrode sheets more convenient and comprehensive.

As shown in FIG. 2, in this embodiment, the electrode sheet segmentation unit includes an unwinding mechanism 1, a strip-feeding length counter 2, a laser marking mechanism 3, and a winding mechanism 7. The lithium electrode sheets to be processed are unwound by the unwinding mechanism 1, sequentially pass through the strip-feeding length counter 2 and the laser marking mechanism 3, and are wound by the winding mechanism 7. It should be noted that all the mentioned components of the electrode sheet segmentation unit, such as the unwinding mechanism 1 and the winding mechanism 7, are conventional components used by those skilled in the art, whose functions are all common functions. For example, the unwinding mechanism 1 is one of the main mechanisms of a strip winding machine, and its main function is to uniformly pull out a strip material from a material reel with a certain tension. Specific functions of the aforementioned components are not specifically limited herein. Connection relationships of the components are determined based on a process flow of the electrode sheets. The components are sequentially connected through the electrode sheets. Specifically, through the interaction of components of the electrode sheet segmentation unit, fine-grained physical segmentation on the entire coiled material of lithium electrode sheets is achieved, and by incorporating the MES system, more accurate quality tracing of the lithium electrode sheets is achieved.

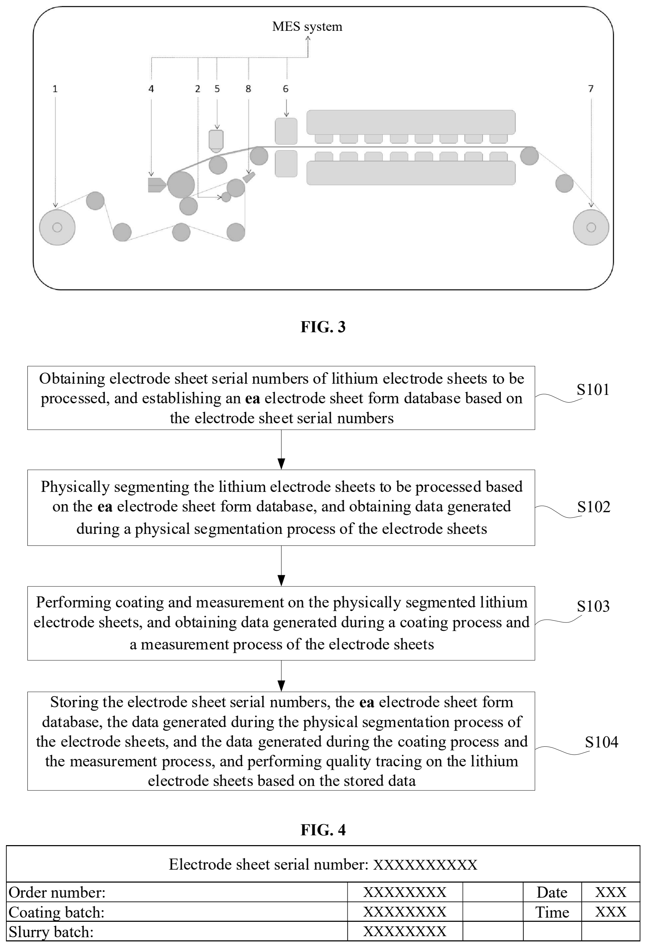

As shown in FIG. 3, in this embodiment, the coating unit includes a laser-marked code reader 8 and a coating mechanism 4. The laser-marked code reader 8 is configured to identify electrode sheet serial numbers, and the coating mechanism 4 is configured to perform coating on the lithium electrode sheets to be processed. The electrode sheet measurement unit includes a CCD dimensional measurement device 5 and an electrode sheet weight measurement device 6. The CCD dimensional measurement device 5 is configured to measure the dimensions and position of coated areas on the electrode sheets, and the electrode sheet weight measurement device 6 is configured to measure the weight of the electrode sheets, thereby feeding back areal density data of the electrode sheets. It should be noted that the full English name of CCD is charge coupled device, which may also be referred to as a CCD image sensor. A CCD is a semiconductor device that can convert optical images into digital signals. The CCD dimensional measurement device 5 is mainly used for all-round detection of key parameters of a battery module, such as length, width and height. In this embodiment, connection relationships among the laser-marked code reader 8, the coating mechanism 4, the CCD dimensional measurement device 5, and the electrode sheet weight measurement device 6 are also determined based on the process flow of the electrode sheets. The above-described components are correspondingly connected through the electrode sheets. Specifically, the electrode sheet measurement unit is used to measure the dimensions and weight of the fine-grained electrode sheets which have been subjected to the segmentation, helping to improve the quality of the electrode sheets, and increasing the precision of quality tracing of the lithium electrode sheets to some extent.

According to an embodiment of the present application, a quality tracing method for lithium electrode sheets is provided, which uses the above-described quality tracing system for lithium electrode sheets to trace quality. As shown in FIG. 4, the method includes:
step S101: obtaining electrode sheet serial numbers of lithium electrode sheets to be processed, and establishing an **ea** electrode sheet form database based on the electrode sheet serial numbers;
step S102: physically segmenting the lithium electrode sheets to be processed based on the **ea** electrode sheet form database, and obtaining data generated during a physical segmentation process of the electrode sheets;
Step S103: performing coating and measurement on the physically segmented lithium electrode sheets, and obtaining data generated during a coating process and a measurement process of the electrode sheets; and
step S104: storing the electrode sheet serial numbers, the **ea** electrode sheet form database, the data generated during the physical segmentation process of the electrode sheets, and the data generated during the coating process and the measurement process, and performing quality tracing on the lithium electrode sheets based on the stored data.

In the present application, after the lithium electrode sheets to be processed are physically segmented based on the **ea** electrode sheet form database, the refinement of electrode sheet marking and quality traceability are achieved by incorporating an MES system. An **ea** electrode sheet is the smallest electrode sheet unit after physical segmentation; in a wound battery cell, the **ea** electrode sheet refers to an electrode sheet used in producing a single battery cell; and in a laminated battery cell, the **ea** electrode sheet refers to an electrode sheet of one lamination. Through the exclusive and comprehensive database for individual **ea** electrode sheets, adjustment reference data can be provided for pre-adjustment of subsequent production procedures. Additionally, good products and defective products of electrode sheets can be accurately distinguished, thereby avoiding the phenomenon in which the defective products of the electrode sheets flow to subsequent procedures and the good products are overly filtered out and scrapped, and making the statistics on the yield of the electrode sheets more accurate, and the quality tracing of the electrode sheets more convenient and comprehensive.

Specifically, the process of obtaining electrode sheet serial numbers of lithium electrode sheets to be processed in the above-described step S 101 includes: inputting order information of the lithium electrode sheets to be processed into an MES system, and encoding the lithium electrode sheets to be processed according to a preset coding rule to obtain the electrode sheet serial numbers of the lithium electrode sheets to be processed. For example, the preset coding rule is in the form of date + serial number, which is merely provided as an example for illustration and not intended as a limitation. The rule may be adaptively adjusted according to actual application requirements. In this embodiment, by assigning the electrode sheet serial numbers to the lithium electrode sheets, specific conditions of the electrode sheets and quality tracing information corresponding to the electrode sheet serial numbers can be accurately obtained, offering the advantages of rapidity, convenience and accuracy for the quality tracing of the electrode sheets.

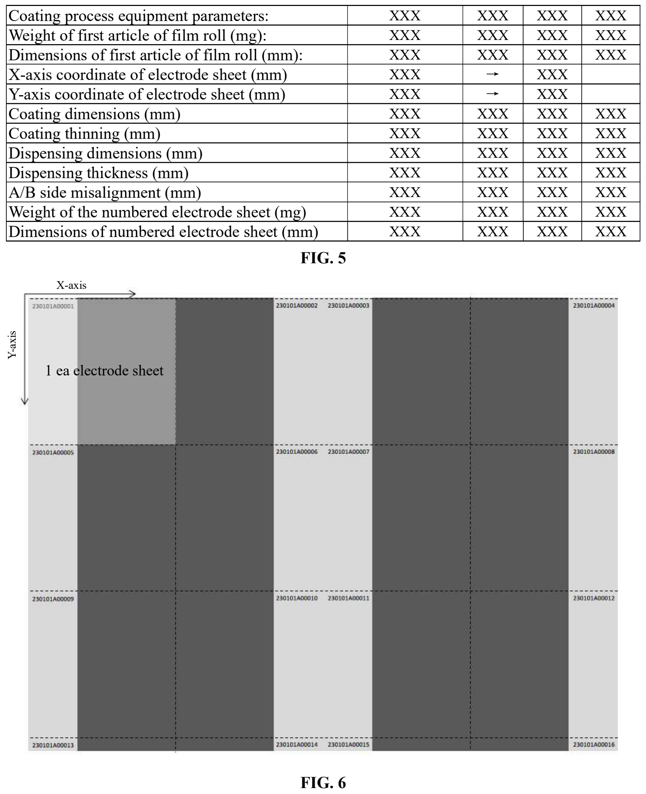

In this embodiment, the process of establishing an **ea** electrode sheet form database based on the electrode sheet serial numbers includes: obtaining relevant data of production procedures of the corresponding electrode sheets based on the electrode sheet serial numbers, and establishing the **ea** electrode sheet form database based on the relevant data, wherein the relevant data includes: order number, coating batch, slurry batch, date, time, slurry stirring equipment parameters, coating process equipment parameters, first article inspection data, and electrode sheet production process data corresponding to the electrode sheet serial numbers. Refer to FIG. 5 for the **ea** electrode sheet form database. It should be noted that the slurry stirring equipment parameters stored in the **ea** electrode sheet form database include parameters such as slurry temperature and viscosity. The coating process equipment parameters include parameters such as coating process parameters, coating parameters, coating first and last article data, in-process dimensions of coated electrode sheets, in-process weight of coated electrode sheets, and coating defect detection data. Additionally, the relevant data further includes parameters such as rolling first and last article data, in-process thickness of rolled electrode sheets, arc height of rolled electrode sheets, and die-cut first and last article data. These are provided merely as examples for illustration. The quantity and type of parameters are not specifically limited, and may be adaptively adjusted according to actual application requirements. Specifically, the **ea** electrode sheet form database is used to store key data involved in the production procedures of the **ea** electrode sheets, facilitating rapid implementation of fine-grained quality tracing of the electrode sheets.

Specifically, physically segmenting the lithium electrode sheets to be processed in the above-described step S102 includes: under the control of the MES system, the electrode sheet segmentation unit marking the electrode sheets in **ea** units, and physically segmenting the lithium electrode sheets to be processed based on the **ea** electrode sheet form database by physical laser marking. The process thereof includes: using a laser marking mechanism 3 to mark the lithium electrode sheets to be processed based on the electrode sheet serial numbers of the lithium electrode sheets to be processed, thereby defining the positions of **ea** electrode sheets to achieve physical segmentation of the lithium electrode sheets to be processed. In this embodiment, the electrode sheets are marked in **ea** units, and by using the electrode sheet segmentation unit, fine-grained physical segmentation on the entire coiled material of lithium electrode sheets is achieved, facilitating more accurate quality tracing of the lithium electrode sheets.

In this embodiment, after the physical segmentation of the lithium electrode sheets to be processed is completed, the **ea** electrode sheets are coated by a coating mechanism 4; and after the coating of each **ea** electrode sheet is completed, dimensional measurement is further performed by using a CCD dimensional measurement device 5, and weight measurement is further performed by using an electrode sheet weight measurement device 6, and dimensional data and weight data of the coated **ea** electrode sheets are input to the MES system for storage. Specifically, the electrode sheet measurement unit is used to measure and store the dimensions and weight of the fine-grained electrode sheets which have been subjected to the segmentation, ensuring high quality of the dimensions and the weight of the fine-grained electrode sheets, and increasing the precision of quality tracing of the lithium electrode sheets to some extent.

Specifically, the process of collecting the data generated during the coating process and the measurement process of the electrode sheets in the above-described step S103 includes:
step a1: using a laser-marked code reader 8 to identify marked electrode sheet serial numbers, and respectively obtaining distances from the laser-marked code reader 8 to the coating mechanism 4, to the CCD dimensional measurement device 5, and to the electrode sheet weight measurement device 6, which are respectively denoted as a, b and c;
step a2: identifying electrode sheet serial numbers of the **ea** electrode sheets with marked codes, and when the laser-marked code reader 8 detects the electrode sheet serial number of the first **ea** electrode sheet, recording a counted value of the strip-feeding length counter 2 at that time, which is denoted as m;
step a3: when the counted value of the strip-feeding length counter 2 is m+a, starting to coat to-be-coated areas in the first row by the coating mechanism 4;
step a4: when the counted value of the strip-feeding length counter 2 is m+b, starting to measure the dimensions of the coated areas in the first row by the CCD dimensional measurement device 5;
step a5: when the counted value of the strip-feeding length counter 2 is m+c, starting to measure the electrode sheet weight in the coated areas in the first row by the electrode sheet weight measurement device 6; and
step a6: in a similar manner, performing the identification, coating and measurement processes on the remaining **ea** electrode sheets, and collecting data generated during the respective coating processes and the respective measurement processes of the **ea** electrode sheets.

In this embodiment, by setting specific coating and measurement rules, normal execution of procedures of electrode sheet production is ensured. It should be noted that the sequence of the steps in the above-described process is not specifically limited, and is determined based on actual application requirements.

In this embodiment, the electrode sheet weight measurement device 6 uses a matrix-type measurement method to measure the electrode sheet weight in the coated areas. Specifically, the electrode sheet weight measurement is optimized into the matrix-type measurement method, which makes the distribution of the electrode sheet weight measurement more precise, thereby avoiding incomplete weight measurement data, and eliminating the occurrence of area data gaps.

In a specific embodiment, according to the quality tracing system and method for lithium electrode sheets, the process of quality tracing for any lithium electrode sheets to be traced includes the following steps:
Step 1: MES system coding. Order information of lithium electrode sheets to be processed is input into an MES system. Based on the order information, the MES system performs product coding on the electrode sheets to be processed according to electrode sheet serial numbers. The assigned electrode sheet serial numbers will accompany the electrode sheets throughout the entire production lifecycle of the electrode sheets.
Step 2: establishing an **ea** electrode sheet form database. The MES system establishes an **ea** electrode sheet form database based on product type, slurry batch, coating batch, coating process parameters, coating parameters, coating first and last article data, in-process dimensions of coated electrode sheets, in-process weight of coated electrode sheets, coating defect detection, rolling first and last article data, in-process thickness of rolled electrode sheets, arc height of rolled electrode sheet, and die-cut first and last article data corresponding to the electrode sheet serial numbers.
Step 3: laser marking. Referring to FIG. 2, this step requires an unwinding mechanism 1, a strip-feeding length counter 2, a laser marking mechanism 3, a winding mechanism 7, and the MES system. A base material scheduled for production according to an order is loaded onto the unwinding mechanism 1. The base material is threaded along a strip-feeding path of equipment. The MES system sends the serial numbers of the electrode sheets to be processed to the laser marking mechanism 3. The equipment is started. The unwinding mechanism 1 performs unwinding. The winding mechanism 7 performs winding. The base material is fed at a preset speed of the equipment. The laser marking mechanism 3 starts marking according to an instruction from the MES system. Simultaneously with the marking, the strip-feeding length counter 2 starts length recording along a longitudinal direction of the base material. After the base material is fed for a certain distance, the laser marking mechanism 3 performs marking again. This process is repeated to accomplish physical segmentation of the electrode sheets in the longitudinal direction of the base material. The winding mechanism 7 winds the marked base material. Marking positions are located on two sides of to-be-coated areas of the base material. As shown in FIG. 6, two parallel coating passes are performed, and a resulting coated material obtained from each coating pass is transversely slit into two electrode sheets, which correspond to two laser codes.

Specifically, the base material of the lithium electrode sheets to be traced is placed on the unwinding mechanism 1 and threaded along a direction of intermediate rollers to the winding mechanism 7. After the threading is completed, the equipment performs strip feeding. The strip-feeding length counter 2 starts length recording. At the same time, the MES system sends the assigned electrode sheet serial numbers to the laser marking mechanism 3. When the base material reaches the position of the laser marking mechanism 3, the strip feeding pauses, and the laser marking mechanism starts marking the first code according to a coding sequence. After the first code is marked, the laser marking mechanism 3 pauses, and the equipment resumes strip feeding, and the strip-feeding length counter 2 performs length recording. When a length recorded by the strip-feeding length counter 2 minus a length recorded when the laser marking mechanism 3 paused equals the length of one **ea** electrode sheet, the laser marking mechanism 3 marks the second code. After the marking is completed, the laser marking mechanism 3 pauses, and the strip-feeding length counter 2 records a current length again. When a length recorded by the strip-feeding length counter 2 minus a length recorded when the laser marking mechanism 3 paused equals the length of one **ea** electrode sheet again, the laser marking mechanism 3 marks the third code. This cycle is repeated until the feeding of the base material is completed, thus completing laser marking of the entire coiled material.

Step 4: Coating and measurement. After the coating mechanism 4 threads a threading base material according to a strip-feeding diagram, the base material that has been subjected to laser marking in step 3 is placed on the unwinding mechanism 1 and connected to the threading base material. Subsequently, the coating mechanism 4 performs strip feeding, and at the same time, the strip-feeding length counter 2 starts length recording, the laser-marked code reader 8 starts identifying laser-marked codes, the strip-feeding length counter 2 and the laser-marked code reader 8 jointly determine a Y-axis position of the base material, the coating mechanism 4 starts coating, the CCD dimensional measurement device 5 starts measuring the dimensions of the electrode sheets, the electrode sheet weight measurement device 6 starts measuring the weight of each **ea** electrode sheet, the winding mechanism 7 starts winding, and the MES system collects, in real time, data generated during the electrode sheet production process along a time axis.

It should be noted that in step 4, after the coating mechanism 4 coats the first **ea** electrode sheet, the CCD dimensional measurement device 5 performs dimensional and defect measurements on the coated first **ea** electrode sheet. After synchronization with Y-axis data, the MES system records and stores X-axis defect data of the first **ea** electrode sheet. After the coating mechanism 4 coats the second **ea** electrode sheet, the above-described process is repeated until coating of the entire film roll is completed. After the coating mechanism 4 coats the first **ea** electrode sheet and performs dimensional and defect measurements thereon, the electrode sheet weight measurement device 6 performs weight measurement on the coated first **ea** electrode sheet. After synchronization with Y-axis and X-axis data (a Y-axis direction is a strip-feeding direction, and an X-axis direction is perpendicular to the strip-feeding direction), the MES system records and stores weight data of the first **ea** electrode sheet. After the coating mechanism 4 coats the second **ea** electrode sheet, the above-described process is repeated until coating of the entire film roll is completed.

In this embodiment, while the MES system records and stores the weight and dimensional data, it also records and stores equipment parameters during electrode sheet production. Additionally, data generated when the electrode sheets are processed during other procedures may also be stored in the MES system.

Step 5: quality tracing. The MES system provides a query window, enabling quality query of the electrode sheets based on parameters such as date, time, batch number, electrode sheet serial numbers, weight data, dimensional data, and equipment parameters corresponding to the electrode sheets.

It should be noted that in addition to lithium battery electrode sheets, the quality tracing system and method for lithium electrode sheets according to the embodiments of the present application may also be applied to other fields where good products and defective products of other coiled materials cannot be accurately distinguished, resulting in difficulty in quality traceability. In summary, in the quality tracing method for lithium electrode sheets according to the embodiments of the present application, an entire roll of electrode sheets is segmented to obtain **ea** electrode sheets, and relevant quality data is bound to the electrode sheets and uploaded to the MES system for storage. The data is shared with subsequent procedures, and can be retrieved just by identifying electrode sheet marks. In this way, good products and defective products can be more accurately distinguished, thereby effectively preventing the phenomenon in which the defective products of the electrode sheets flow to subsequent procedures and the good products of the electrode sheets are overly filtered out and scrapped, and making the statistics on the yield of the electrode sheets more accurate, and the quality tracing of the electrode sheets more convenient and comprehensive.

Obviously, the embodiments described above are merely examples for clear description, and are not intended to limit the implementations. Other variations or modifications of various forms may also be made by those skilled in the art based on the above description. There is no need and no way to describe all implementations in an exhaustive manner here. Obvious variations or modifications derived therefrom are still within the protection scope of the present application.

## Claims

1. A quality tracing system for lithium electrode sheets, wherein the system comprises:
an electrode sheet segmentation unit, a coating unit, an electrode sheet measurement unit and a control unit,
wherein the electrode sheet segmentation unit is configured to perform physical segmentation on lithium electrode sheets to be processed;
the coating unit is configured to identify and coat the lithium electrode sheets which have been subjected to the physical segmentation;
the electrode sheet measurement unit is configured to measure the coated lithium electrode sheets; and
the control unit is configured to control the electrode sheet segmentation unit, the coating unit and the electrode sheet measurement unit to operate, collect data generated during a physical segmentation process, a coating process and a measurement process of the electrode sheets and store the data, and perform quality tracing on the lithium electrode sheets according to the stored data.

2. The quality tracing system for lithium electrode sheets according to claim 1, wherein the electrode sheet segmentation unit comprises an unwinding mechanism, a strip-feeding length counter, a laser marking mechanism, and a winding mechanism, and the lithium electrode sheets to be processed are unwound by the unwinding mechanism, sequentially pass through the strip-feeding length counter and the laser marking mechanism, and are wound by the winding mechanism.

3. The quality tracing system for lithium electrode sheets according to claim 1, wherein the coating unit comprises a laser-marked code reader and a coating mechanism, wherein the laser-marked code reader is configured to identify electrode sheet serial numbers, and the coating mechanism is configured to perform coating on the lithium electrode sheets to be processed; and the electrode sheet measurement unit comprises a CCD dimensional measurement device and an electrode sheet weight measurement device, wherein the CCD dimensional measurement device is configured to measure the dimensions and position of coated areas on the electrode sheets, and the electrode sheet weight measurement device is configured to measure the weight of the electrode sheets, thereby feeding back areal density data of the electrode sheets.

4. A quality tracing method for lithium electrode sheets, using the quality tracing system for lithium electrode sheets according to any one of claims 1 to 3 to trace quality, wherein the method comprises:
obtaining electrode sheet serial numbers of lithium electrode sheets to be processed, and establishing an **ea** electrode sheet form database based on the electrode sheet serial numbers;
physically segmenting the lithium electrode sheets to be processed based on the **ea** electrode sheet form database, and obtaining data generated during a physical segmentation process of the electrode sheets;
performing coating and measurement on the physically segmented lithium electrode sheets, and obtaining data generated during a coating process and a measurement process of the electrode sheets; and
storing the electrode sheet serial numbers, the **ea** electrode sheet form database, the data generated during the physical segmentation process of the electrode sheets, and the data generated during the coating process and the measurement process, and performing quality tracing on the lithium electrode sheets based on the stored data.

5. The quality tracing method for lithium electrode sheets according to claim 4, wherein the process of obtaining electrode sheet serial numbers of lithium electrode sheets to be processed comprises: inputting order information of the lithium electrode sheets to be processed into a control unit, and encoding the lithium electrode sheets to be processed according to a preset coding rule to obtain the electrode sheet serial numbers of the lithium electrode sheets to be processed.

6. The quality tracing method for lithium electrode sheets according to claim 4, wherein the process of establishing an **ea** electrode sheet form database based on the electrode sheet serial numbers comprises: obtaining relevant data of production procedures of the corresponding electrode sheets based on the electrode sheet serial numbers, and establishing the **ea** electrode sheet form database based on the relevant data, wherein the relevant data comprises: order number, coating batch, slurry batch, date, time, slurry stirring equipment parameters, coating process equipment parameters, first article inspection data, and electrode sheet production process data corresponding to the electrode sheet serial numbers.

7. The quality tracing method for lithium electrode sheets according to claim 4, wherein, under the control of the control unit, the electrode sheet segmentation unit marks the electrode sheets in **ea** units, and physically segments the lithium electrode sheets to be processed based on the **ea** electrode sheet form database by physical laser marking, and the process thereof comprises: using a laser marking mechanism to mark the lithium electrode sheets to be processed based on the electrode sheet serial numbers of the lithium electrode sheets to be processed, thereby defining the positions of **ea** electrode sheets to achieve physical segmentation of the lithium electrode sheets to be processed.

8. The quality tracing method for lithium electrode sheets according to claim 7, wherein, after the physical segmentation of the lithium electrode sheets to be processed is completed, the **ea** electrode sheets are coated by a coating mechanism; and after the coating of each **ea** electrode sheet is completed, dimensional measurement is further performed by using a CCD dimensional measurement device, and weight measurement is further performed by using an electrode sheet weight measurement device, and dimensional data and weight data of the coated **ea** electrode sheets are input to the control unit for storage.

9. The quality tracing method for lithium electrode sheets according to claim 8, wherein the process of collecting the data generated during the coating process and the measurement process of the electrode sheets comprises:
using a laser-marked code reader to identify marked electrode sheet serial numbers, and respectively obtaining distances from the laser-marked code reader to the coating mechanism, to the CCD dimensional measurement device, and to the electrode sheet weight measurement device, which are respectively denoted as a, b and c;
identifying electrode sheet serial numbers of the **ea** electrode sheets with marked codes, and when the laser-marked code reader identifies the electrode sheet serial number of the first **ea** electrode sheet, recording a counted value of the strip-feeding length counter at that time, which is denoted as m;
when the counted value of the strip-feeding length counter is m+a, starting to coat to-be-coated areas in the first row by the coating mechanism;
when the counted value of the strip-feeding length counter is m+b, starting to measure the dimensions of the coated areas in the first row by the CCD dimensional measurement device;
when the counted value of the strip-feeding length counter is m+c, starting to measure the electrode sheet weight in the coated areas in the first row by the electrode sheet weight measurement device; and
in a similar manner, performing the identification, coating and measurement processes on the remaining **ea** electrode sheets, and collecting data generated during the respective coating processes and the respective measurement processes of the **ea** electrode sheets.

10. The quality tracing method for lithium electrode sheets according to claim 8, wherein the electrode sheet weight measurement device uses a matrix-type measurement method to measure the electrode sheet weight in the coated areas.
